# EUROPEAN PATENT SPECIFICATION

(11) **EP 3 164 000 B1**
(45) Date of publication and mention of the grant of the patent: **13.11.2019**
(21) Application number: 15779760.6
(22) Date of filing: 08.05.2015
(51) Int. Cl.: A01F 15/07, B65B 11/02, B65B 57/02

(54) **AGRICULTURAL MACHINE**
LANDWIRTSCHAFTLICHE MASCHINE
MACHINE AGRICOLE

(43) Date of publication of application: 10.05.2017
(73) Proprietor: Oy El-Ho Ab, 68910 Bennäs (FI)
(72) Inventor: WEST, Filip, 68600 Jakobstad (FI); FORSÉN, Peter, 68920 Pedersöre (FI); LÖFBACKA, Johan, 68930 Purmo (FI)
(74) Representative: Kolster Oy Ab
(86) International application number: PCT/FI2015/000021
(87) International publication number: WO 2015/158951

(56) References cited:
- EP-A1- 0 924 133
- EP-A1- 1 083 126
- EP-A1- 1 083 126
- WO-A1-98/41450
- WO-A1-98/41450
- WO-A1-2013/008161
- WO-A1-2013/008161
- US-A1- 2003 089 081
- US-A1- 2003 089 081
- US-A1- 2003 089 864
- US-A1- 2003 089 864

## Description

The invention relates to an agricultural machine for wrapping of round bales according to claim 1, intended to be connected to a tractor. The invention also relates to a method to detect film disturbances on such agricultural machine according to claim 4.

The wrapping of round bales for silage has improved strongly during the past years, among others because of the flexibility of the system and the small amount of manpower needed.

Although the sales of so called baler-wrapper combinations with a wrapper fix connected to a round baler has increased in Finland is the method to first press the grass with a baler and after to wrap the bales in plastic film globally the by far most common way of producing bale silage. Such bale wrappers may be equipped with systems indicating if film is applied on the bale. Such a mechanical system is presented in the publication EP 0 924 133, for instance.

To improve the capacity the wrappers are today mostly equipped with double film pre stretchers. Anyhow a new source of disturbance occurs when the wrapper is equipped with double pre stretchers. This due to the fact, that it is practically impossible to get bout of the stretcher units to always work so accurate that bout of them will be out of film at the same time. Most frequent it happens in practice that when one film roll is empty, there is still enough film on the other to at least finish the bale already at work. As one hereby mostly prefer to change only the empty roll one have to interrupt working after the next bale and step down from the cabin to replace the other film roll. The fact that the film in bout of the stretcher units hardly at any time fill be empty at the same time is also depending of the fact that two film rolls seldom consist the same amount of film in meter. The amount of film is mostly determinate in kg and not in meter of length, which also contribute to increase the frequencies of disturbances.

The patent document FI 100874 do present a partial solution to this problem. Here a wrapper with double pre stretchers is shown where each of the pre stretcher units are equipped with a film brake sensor. When the film roll in one of the pre stretchers is empty or the film crack the electronic control unit of the wrapper do automatically double the amount of remaining wraps around the bale with the remaining functional pre stretcher to ensure correct amount of film on the bale.

This method has proved to work well in practice, and is today in use by most of the producers of baler-wrapper combinations. One disadvantage of the system is that it depends on a signal connection from the in general around the bale rotating film pre stretchers and the electronic control system of the wrapper. This signal connection has in practical solutions either been done with so-called slip ring connections, or with wireless transfer. Both solutions are rather expensive and as the sensors do work with low tensions and currents the disturbance sensitivity is frequently so big due to corrosion and dirt, that it takes away a great part of the benefit with the film control system.

To halve the above described problem with the disturbance that is created when the film will crack or when the roll will be empty, a cost effective control system according to the present invention has been developed, and the invention is characterized by what is described in the patent claims below.

The invention is below described relating to the following drawings:
Fig 1 shows a principal side view of a bale wrapper with two wrap arms.
Fig 2 shows a principal top view of the same bale wrapper.

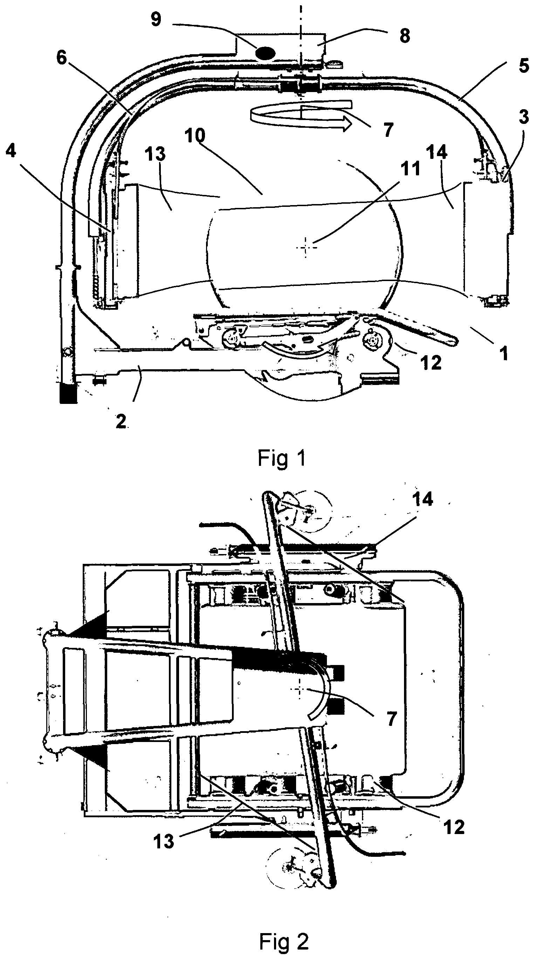

According to the Fig 1, the wrapper consist of a conventional wrapping unit 1 mounted on a frame 2. The wrapping unit is equipped with two separate pre stretch units 3 and 4 for the plastic film mounted on the wrap arms 5 and 6. These rotate around a vertical centre axis 7 by the drive unit 8 and to apply pre stretch film from the pre stretcher units 3 and 4 around the bale 10. The bale do at the same time also rotate around its horizontal centre axis 11, driven by the support roller 12, and to ensure that the film will be applied around the hole circumstance of the bale, these two rotation speeds are synchronized with each other.

To ensure that the film will be pre stretched in the pre stretcher units a tension in the film 13, 14 bigger than the yield point of the material is required.

This normally results in a pulling force of approx. 150 - 200 N for the most common 750mm wide commercially available stretch films on the market. The torque or the power needed from the drive unit 8 to rotate the wrapping arms around the vertical centre axis 7 is registered by a sensor 9. The information from the sensor 9 is registered and processed by a not shown electronic control unit 15.

Normally the wrapping arms are driven by a hydraulic motor, and therefore the pressure drop over the hydraulic motor can be used to register the torque to rotate the arms, in any position needed.

As the bale in a top view show a rectangular cross-section, it is possible as clearly to be seen from the Fig. 2 that the perpendicular distance from the stretched film 13, 14 to the vertical centre axis 7 change during the wrapping process. Therefore, also the torque needed to rotate the arms 5, 6 will have a regular variation.

The information registered by the sensor 9 will thus show big variations. This information is further send to the not shown electronic control unit 15 that while wrapping continuously register these measured values and their variations. From this information the control unit can then calculate if the film has cracked or if the film roll in one or more of the pre stretchers has run empty.

This can be done for example so, that a torque diagram (or power diagram) is produced and continuously stored, preferably as a function of the rotation angel of the wrap arms. As long as all pre stretchers work as normal, these diagrams will follow a somehow regular aunt.

If the film in one pre stretcher run empty or crack, the torque (or the power) needed to rotate the arms 5, 6 around the bale will suddenly decrease. When the control unit by missing film detect a bigger difference as normal between the from the sensor 9 measured value compared to the stored reference values, the control unit alarm film brake. From the size of the difference it is also possible to decide how many pre stretchers have film disturbances.

It can be a advantageous to us analysis of variance and probability to improve the determining accuracy for the film disturbance, in particular the available sensor 9 does not measure only the torque of the wrapping arms, but also registers for example the total pressure for several or all of the hydraulic functions of the wrapper.

In an advantageous manner this can for example happen as follow:
First a median value for the pressure during a short period of time will be created. After an estimated value A for what the pressure should be at different numbers of film simultaneous applied.

By calculating this value it can be advantageous to also take the wrap arm speed and the actual bale size in account.

After that the absolute amounts of the estimated value minus the measured median value (for the pressure) and the so created variable B describes the deviation from the estimated value.

This variable B will be calculated for all numbers of pre stretchers possible. (On a wrapper equipped with two pre stretchers: 0, 1 and 2). Many times the variable B can be used directly to determinate the probable number of film, but this variable is sensitive for pressure disturbances.

To improve the determination accuracy and to ignore situations where the pressure temporary deviate for example by use of other hydraulic functions it is advantageous to calculate the standard deviation of the pressure during the same period of time for which the median value was calculated.

After that the invers value of the previously calculated deviation divided by the standard deviation to get the final reliability factor for each numbers of films. The biggest of these reliability factors is then compared to a limit value. Is the value above the limit value it can be estimated that the real number of films is in accordance with the biggest reliability factor. Is the biggest reliability factor below the limit value, the number of film layers cannot be determinate for example due to other pressure disturbances than from the wrapping arms.

After a on one of the above manners registered missing of film in one pre stretcher preferably what is described in FI 100574 can occur. It is a benefit if the machine is equipped with separate speed control for the rotation of the bale and for the rotation of the wrapping arms. Then it is possible to develop the control program to reduce the rotation speed of the bale around its horizontal centre axis if one film is at its end or crack. In this manner it will be possible to maintain the overlap between the film layers on the bale constant in spite of disturbance in one pre stretcher. When disturbance occur in all of the pre stretchers the wrapping will be stopped.

The main advantage of the system is that it greatly increase the capacity of the wrapping of
bales as the number of disturbing cases by which the driver has to stop the work and leave
the tractor cabin is roughly cut by the half.

Another benefit is that the film detection system can be arranged without need of additional components to be added on the wrapper. The sensor 9 is a pressure sensor in the hydraulic system which can also be used to control other functions of the wrapper.

The invention is not limited to the above described version but a number of variations of it is possible within the scope of the following patent claims.

So can for example the sensor to register the torque (or the pressure) not be positioned close to the drive unit, but can be mounted wherever in the power supply line. The pressure sensor can be in or close to the control valve of the wrapper.

## Claims

1. An agricultural machine intended for wrapping of round bales with stretch film, the agricultural machine being a wrapper and comprising at least one pre stretcher (3, 4) for the film, the pre stretcher being mounted on a wrap arm (5, 6) to be rotated by a drive unit (8),
and, further at least two mainly horizontal support rollers of which at least one of them (12) is driven to rotate the bale (10) around a horizontal centre axis (11) thereof,
**characterised** thereby, that
a pressure sensor (9) mounted in a hydraulic system used to control the wrapper is arranged to register the load of the drive unit (8) that is configured to stretch the film around the bale, and an electronic control unit is configured to determinate on the base of this information if film disturbances are on one or on several of the pre stretchers.

2. An agricultural machine according to claim 1, **characterised** thereby, that the pressure sensor (9) is mounted in the control valve of the power supply line of the wrapper.

3. An agricultural machine according to claim 1, **characterised** thereby, that the pressure sensor (9) is mounted close to the control valve of the power supply line of the wrapper.

4. A method to detect film disturbances on an agricultural machine according claim 1, **characterised** thereby, that a load diagram for the wrapping process is created and stored based on the information from the sensor (9) and on the base of the difference between this and the by the sensor (9) registered load exceeds given load limit or limits the control unit determinates that film disturbances are on one or on several of the pre stretchers.

5. A method to detect film disturbances on an agricultural machine according claim 4, **characterised** thereby, that
that a median value for the pressure during a short period of time is created to be used as reference value against which the instantaneous load is mirrored,
also the wrapping speed and the bale size is considered by creating the estimated value for what the median value (A) should be at different numbers of film to be applied at the same time.

6. A method to detect film disturbances on an agricultural machine according to claim 4 or 5, **characterised** thereby, that
the control unit is calibrated so that an estimated value for what the median value (A) should be for different numbers of film to be applied simultaneous is created, whereby
the standard deviation of the load is calculated during the same period of time as when the median value was calculated.

## Patentansprüche

1. Landwirtschaftsmaschine, die zum Umwickeln von runden Ballen mit Stretchfolie vorgesehen ist, wobei die Landwirtschaftsmaschine ein Umwickler ist und Folgendes umfasst
mindestens einen Vordehner (3, 4) für die Folie, wobei der Vordehner an einem Wickelarm (5, 6) montiert ist, der von einer Antriebseinheit (8) zu drehen ist,
und ferner
mindestens zwei hauptsächlich horizontale Stützrollen, von denen mindestens eine von ihnen (12) angetrieben wird, um den Ballen (10) um eine horizontale Mittelachse (11) davon zu drehen,
**dadurch gekennzeichnet, dass**
ein Drucksensor (9), der in einem Hydrauliksystem montiert ist, das zum Steuern des Umwicklers verwendet wird, angeordnet ist, die Last der Antriebseinheit (8), die dazu ausgelegt ist, die Folie um den Ballen zu dehnen, zu registrieren, und
eine elektronische Steuereinheit dazu ausgelegt ist, auf Basis dieser Informationen zu bestimmen, ob an einem oder an mehreren der Vordehner Folienstörungen vorhanden sind.

2. Landwirtschaftsmaschine nach Anspruch 1, **dadurch gekennzeichnet, dass** der Drucksensor (9) im Steuerventil der Energieversorgungsleitung des Umwicklers montiert ist.

3. Landwirtschaftsmaschine nach Anspruch 1, **dadurch gekennzeichnet, dass** der Drucksensor (9) in der Nähe des Steuerventils der Energieversorgungsleitung des Umwicklers montiert ist.

4. Verfahren zum Detektieren von Folienstörungen an einer Landwirtschaftsmaschine nach Anspruch 1, **dadurch gekennzeichnet, dass** auf Basis der Informationen vom Sensor (9) ein Lastdiagramm für den Umwicklungsprozess erstellt und gespeichert wird und auf Basis, dass die Differenz zwischen diesem und der vom Sensor (9) registrierten Last eine gegebene Lastgrenze oder gegebene Lastgrenzen überschreitet, die Steuereinheit bestimmt, dass an einem oder an mehreren der Vordehner Folienstörungen vorhanden sind.

5. Verfahren zum Detektieren von Folienstörungen an einer Landwirtschaftsmaschine nach Anspruch 4, **dadurch gekennzeichnet, dass**
dass für eine kurze Zeitperiode ein Mittelwert für den Druck erstellt wird, der als Referenzwert zu verwenden ist, gegen den die momentane Last gespiegelt wird,
durch Erstellen des geschätzten Wertes, den der Mittelwert (A) bei verschiedenen Anzahlen von Folien, die gleichzeitig aufzubringen sind, aufweisen sollte, auch die Wickelgeschwindigkeit und die Ballengröße berücksichtigt wird.

6. Verfahren zum Detektieren von Folienstörungen an einer Landwirtschaftsmaschine nach Anspruch 4 oder 5, **dadurch gekennzeichnet, dass**
die Steuereinheit derart kalibriert ist, dass ein geschätzter Wert, den der Mittelwert (A) bei verschiedenen Anzahlen von Folien, die simultan aufzubringen sind, aufweisen sollte, erstellt wird, wobei
die Standardabweichung der Last in derselben Zeitperiode berechnet wird, in der der Mittelwert berechnet wurde.

## Revendications

1. Machine agricole prévue pour envelopper des balles rondes avec du film extensible, la machine agricole étant une enveloppeuse et comprenant :
au moins un pré-tendeur (3, 4) pour le film, le pré-tendeur étant monté sur un bras d'enveloppement (5, 6) pour être entraîné en rotation par une unité d'entraînement (8),
et en outre :
au moins deux rouleaux de support principalement horizontaux dont au moins l'un d'entre eux (12) est entraîné pour faire tourner la balle (10) autour de son axe central horizontal (11),
**caractérisée** ainsi en ce que :
un capteur de pression (9) monté dans un système hydraulique utilisé pour commander l'enveloppeuse est agencé pour enregistrer la charge de l'unité d'entraînement (8) qui est configurée pour étirer le film autour de la balle, et
une unité de commande électronique est configurée pour déterminer, sur la base de cette information, si des perturbations de film sont sur un ou sur plusieurs des pré-tendeurs.

2. Machine agricole selon la revendication 1, **caractérisée** ainsi en ce que le capteur de pression (9) est monté dans la valve de commande de la ligne d'alimentation en énergie de l'enveloppeuse.

3. Machine agricole selon la revendication 1, **caractérisée** ainsi en ce que le capteur de pression (9) est monté à proximité de la valve de commande de la ligne d'alimentation en énergie de l'enveloppeuse.

4. Procédé pour détecter des perturbations de film sur une machine agricole selon la revendication 1, caractérisé ainsi en ce qu'un schéma de charge pour le procédé d'enveloppement est créé et stocké sur la base de l'information du capteur (9) et sur la base de la différence entre celle-ci et la charge enregistrée par le capteur (9) dépasse la limite ou les limites de charge donnée, l'unité de commande détermine que les perturbations de film sont sur un ou sur plusieurs des pré-tendeurs.

5. Procédé pour détecter les perturbations de film sur une machine agricole selon la revendication 4, caractérisé ainsi en ce que
une valeur médiane pour la pression pendant une courte période de temps est créée pour être utilisée en tant que valeur de référence contre laquelle la charge instantanée est reflétée,
également la vitesse d'enveloppement et la taille de balle sont prises en considération en créant la valeur estimée pour laquelle la valeur médiane (A) doit être appliquée à un nombre différent de films en même temps.

6. Procédé pour détecter les perturbations de film sur une machine agricole selon la revendication 4 ou 5, caractérisé ainsi en ce que :
l'unité de commande est calibrée de sorte qu'une valeur estimée pour laquelle la valeur médiane (A) doit être appliquée à un nombre différent de films simultanément, est créée, moyennant quoi :
l'écart standard de la charge est calculé pendant la même période de temps que lorsque la valeur médiane a été calculée.
